# FASCICULE DE BREVET EUROPEEN

(11) **EP 3 199 434 B1**
(45) Date de publication et mention de la délivrance du brevet: **12.12.2018**
(21) Numéro de dépôt: 17152187.5
(22) Date de dépôt: 19.01.2017
(51) Int. Cl.: B62D 63/06

(54) **REMORQUE ÉQUIPÉE DE MOYENS DE MONTAGE RAPIDE DU TIMON SUR UN CHÂSSIS**
ANHÄNGER, DER MIT SCHNELLBEFESTIGUNGSMITTELN DER ZUGSTANGE AUF EINEM FAHRGESTELL AUSGESTATTET IST
TRAILER PROVIDED WITH MEANS FOR RAPID INSTALLATION OF THE DRAWBAR ON A FRAME

(30) Priorité: 26.01.2016 FR 1650620
(43) Date de publication de la demande: 02.08.2017
(73) Titulaire: TRIGANO REMORQUES, 75019 Paris (FR)
(72) Inventeur: CHEVALIER, Mikaël, 18230 SAINT DOULCHARD (FR)
(74) Mandataire: Gevers & Orès

(56) Documents cités:
- WO-A1-2005/085048
- FR-A1- 2 371 333
- US-A- 4 418 933
- US-A- 4 768 806
- US-A1- 2007 126 209

## Description

### DOMAINE TECHNIQUE DE L'INVENTION

L'invention concerne une remorque pour véhicule automobile, la remorque comportant :
- un châssis roulant ;
- un timon longitudinal qui comporte au moins un bras d'extrémité arrière destiné à être assemblé avec le châssis dans un état assemblé dans lequel le timon est pivotant autour d'un axe transversal entre une position angulaire d'assemblage et une position angulaire d'utilisation. Une telle remorque pour véhicule automobile est connu du document US 2007/126209.

### ARRIERE PLAN TECHNIQUE DE L'INVENTION

L'invention concerne des remorques, notamment des remorques dites "bagagères", qui sont aptes à être attelées à des véhicules de tourismes ou à des véhicules utilitaires tels que des fourgonnettes. L'utilisation de ce type de remorque est bien connue et largement répandue. De telles remorques permettent par exemple à un véhicule de transporter des charges supplémentaires lorsque le compartiment de transport du véhicule est trop petit ou déjà encombré.

La remorque comporte un châssis roulant qui est équipé d'un essieu transversal central portant deux roues. Le châssis est muni d'un plateau de chargement apte à recevoir une charge à transporter.

La remorque comporte un timon, parfois appelé "flèche", qui est fixé au châssis roulant. L'extrémité avant du timon est munie d'un dispositif d'attelage sur le véhicule automobile. Le véhicule est généralement muni d'un crochet ou d'une boule d'attelage, tandis que le timon de la remorque comporte un anneau ou une boîte à rotule qui est destiné à être accroché audit crochet.

Après sa fixation sur le châssis, le timon fait saillie longitudinalement vers l'avant par rapport au plateau de chargement. Le tronçon en saillie peut représenter jusqu'à un quart de la longueur du plateau de chargement. La longueur d'une remorque équipée de son timon peut par exemple dépasser 2,60 m

Les remorques sont généralement transportées par lot jusqu'au local d'un revendeur par un véhicule de livraison, par exemple dans un camion.

Il est particulièrement avantageux de transporter les remorques avec le timon démonté du châssis roulant. La remorque ainsi démontée est beaucoup plus compacte. Ceci permet un remplissage plus efficace du véhicule de livraison. Il est notamment possible de transporter les remorques debout, avec le plateau orienté verticalement.

Cependant, il est préférable, voire obligatoire selon certaines législations, de fournir la remorque montée à l'utilisateur final. Le revendeur doit donc prendre en charge l'assemblage final du timon sur le châssis roulant.

Pour ce faire, les timons comportent un ou deux bras d'extrémité arrière qui sont chacun percé d'un orifice transversal de fixation. Chaque bras est reçu contre un flasque vertical associé fixé sur le châssis. Le flasque est aussi préalablement percé d'un orifice de fixation. Lorsque les orifices de fixation sont alignés, une vis transversale est introduite dans les orifices pour réaliser la fixation du timon avec le châssis roulant.

Cependant, le timon est un élément lourd et encombrant. L'assemblage du timon sur le châssis roulant est donc une opération qui nécessite généralement deux opérateurs. Un premier opérateur s'occupe de positionner le timon sous le châssis. Pendant que le premier opérateur maintient le timon en position, le deuxième opérateur chargé de l'assemblage est contraint de se coucher sous le plateau du châssis roulant pour mettre en place les vis de fixation du timon.

Une telle opération requiert ainsi du temps et du personnel, notamment lorsque plusieurs remorques ont été livrées au revendeur.

L'invention propose de simplifier cette opération d'assemblage du timon en permettant à une personne seule de fixer le timon sur le châssis roulant.

### BREF RESUME DE L'INVENTION

A cette fin, l'invention propose une remorque du type décrit précédemment, caractérisée en ce qu'elle comporte des moyens de guidage en coulissement du timon par rapport au châssis dans un plan vertical longitudinal jusqu'à un état assemblé du timon dans lequel le timon est en butée pivotante autour d'un axe transversal par rapport au châssis, le pivotement du timon jusqu'à sa position angulaire d'utilisation provoquant l'engagement d'une face de blocage du bras derrière une face de butée du châssis bloquant le coulissement du timon par rapport au châssis.

Selon d'autres caractéristiques de l'invention :
- le bras est équipé d'un premier organe d'emboîtement par coulissement avec un deuxième organe complémentaire du châssis, l'un des organes d'emboîtement étant formé par un pivot d'axe transversal guidé en coulissement dans un plan longitudinal transversal dans une encoche formant l'autre organe d'emboîtement jusqu'à son état assemblé dans laquelle le pivot est en butée contre un fond de l'encoche ;
- la remorque comporte des moyens d'attache du timon avec le châssis immobilisant le timon en pivotement dans sa position angulaire d'utilisation ;
- l'un des organes d'emboîtement comporte une face de détrompage qui interdit le pivotement du bras jusqu'à sa position angulaire d'utilisation tant que le bras n'occupe pas son état assemblé ;
- la face de détrompage coopère par contact un élément portant l'une des faces parmi la face de blocage ou la face de butée ;
- la face de détrompage participe au guidage en coulissement du pivot dans l'encoche ;
- le pivot est porté par le châssis tandis que l'encoche est portée par le bras ;
- les moyens d'attache du timon sur le châssis sont formés par de moyens de fixation d'un tronçon intermédiaire du timon sur le châssis ;
- le pivotement du timon est limité dans sa position angulaire d'utilisation par butée d'un tronçon intermédiaire contre le châssis ;
- l'encoche est orientée longitudinalement ;
- l'encoche est orientée verticalement ;
- l'encoche est munie de moyens de verrouillage commandés pour emprisonner le pivot en fond d'encoche lorsque le timon occupe son état assemblé.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une remorque équipée d'un timon fixé sur un châssis roulant ;
- la figure 2 est une vue en perspective de dessous qui représente la remorque de la figure 1, le timon étant démontée et rangé sous le plateau de la remorque pour faciliter son transport ;
- la figure 3 est une vue en perspective qui représente le timon de la remorque de la figure 1 démonté ;
- la figure 4 est une vue de côté qui représente le châssis reposant au sol et le timon démonté au début de son opération d'assemblage ;
- la figure 5 est une vue similaire à celle de la figure 5 qui représente le timon dans un état assemblé avec le châssis et occupant une position angulaire d'assemblage ;
- la figure 6 est une vue similaire à celle de la figure 5 dans laquelle le timon est fixé au châssis dans sa position angulaire d'utilisation.
- les figures 7 à 10 sont des vues de côtés qui représentent les organes d'emboîtement du bras et du châssis étant réalisés selon un premier mode de réalisation de l'invention pendant les différentes opérations de montage d'un bras du timon sur le châssis ;
- la figure 11 est une vue en perspective qui représente le timon immobilisé dans sa position angulaire d'utilisation sur le châssis par des moyens d'attache ;
- les figures 12 et 13 sont des vues similaires à celles des figures 7 et 10 qui représentent différentes opérations de montage d'un bras du timon sur le châssis, les organes d'emboîtement du bras et du châssis étant réalisés selon un deuxième mode de réalisation de l'invention ;
- la figure 14 est une vue similaire à celle de la figure 10 qui représente les organes d'emboîtement du bras et du châssis étant réalisés selon un troisième mode de réalisation de l'invention ;
- les figures 15 à 17 sont des vues similaires à celles des figures 7, 8 et 10 qui représentent les organes d'emboîtement du bras et du châssis étant réalisés selon un quatrième mode de réalisation de l'invention ;
- les figures 18 à 21 sont des vues similaires à celles des figures 7 à 19 qui représentent les organes d'emboîtement du bras et du châssis étant réalisés selon un cinquième mode de réalisation de l'invention ;
- les figures 22 et 23 sont des vues de détails en perspective qui représentent le bras du cinquième mode de réalisation équipé de moyens de verrouillage du timon en état assemblé avec le châssis ;
- la figure 24 est une vue similaire à celle de la figure 23 qui représente le bras réalisé selon le premier mode de réalisation de l'invention équipé de moyens de verrouillage.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif un repère rattaché au timon comportant des orientations :
- longitudinale "L", dirigée d'arrière en avant selon le sens de déplacement normal de la remorque ;
- verticale "V", dirigée de bas en haut orthogonalement au timon ;
- transversale "T", dirigée de gauche à droite.

Sauf indication contraire, la direction verticale "V" est utilisée à titre de repère géométrique indépendant de la direction de la gravité.

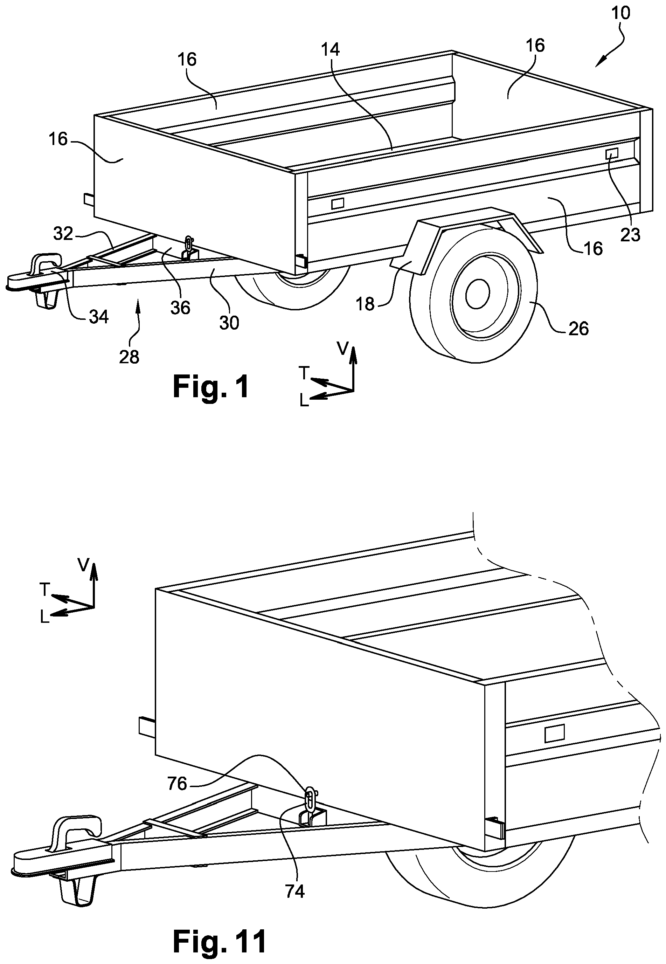

On a représenté à la figure 1 une remorque 10 qui est destinée à être attelée à un véhicule automobile (non représenté). Il s'agit d'une remorque 10 dite "bagagère".

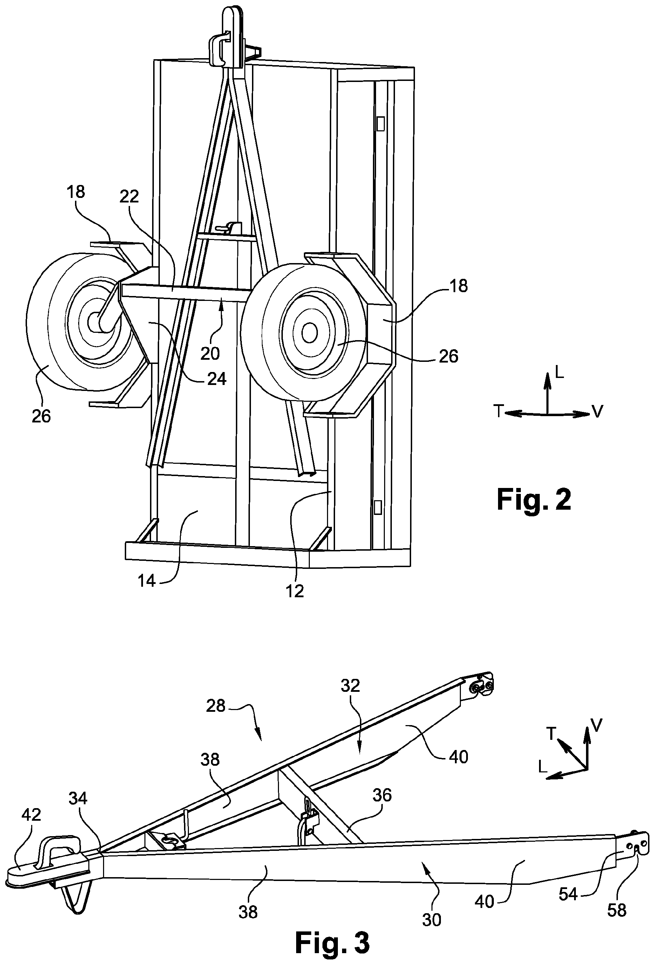

De manière classique, la remorque 10 comporte un châssis 12 roulant, visible à la figure 2. Le châssis 12 comporte un cadre formé d'un assemblage de poutres s'étendant dans un même plan horizontal.

Plusieurs éléments sont destinés à être montés sur le châssis 12.

Le châssis 12 porte notamment un plateau 14 horizontal destiné à recevoir une charge à transporter. Les bords latéraux et les bords avant et arrière du plateau 14 sont équipés de ridelles 16 qui sont destinées à retenir la charge à bord du plateau 14. La ridelle 16 avant est ici fixe par rapport au châssis 12.

En outre, deux garde-boues 18 sont agencés latéralement de part et d'autre du plateau 14. Ces garde-boues 18 sont portés par le châssis 12. Ils sont agencés longitudinalement au milieu du plateau 14.

Le châssis 12 roulant comporte un unique essieu 20 central qui est agencé sous le plateau 14. L'essieu 20 présente une traverse 22 d'axe transversal qui relie deux flasques 24 verticaux longitudinaux dont chacun est fixé sous le cadre du châssis 12. L'essieu 24 porte deux roues 26 qui sont rotatives autour d'un axe transversale commun et qui sont agencées chacune à une extrémité transversale associée de l'essieu 24. Les roues 26 sont logées dans les garde-boues 18

Le châssis 12 roulant est aussi équipé de divers accessoires tels que des dispositifs 23 de signalisation réglementaires qui sont répartis sur les deux bords latéraux du châssis 12.

La remorque 10 comporte aussi un timon 28 d'attelage, aussi connu sous l'appellation "flèche", qui s'étend globalement selon une direction longitudinale, comme représenté plus en détails à la figure 3. Le timon 28 est un élément qui est apte à être fixé au châssis 12 roulant, par exemple après montage des autres éléments précités sur le châssis 12 roulant, dans une position angulaire d'utilisation représentée à la figure 1 dans laquelle l'axe longitudinal du timon 28 est parallèle au plateau 14 de la remorque 10.

Le timon 28 est formé par une structure de poutres assemblées rigidement. La structure du timon 28 présente deux bras 30, 32 formant un chevron qui s'étend globalement longitudinalement depuis un embranchement 34 d'extrémité avant. Les deux extrémités arrière des bras 30, 32 sont écartées transversalement d'une distance similaire à la largeur transversale du châssis 12.

Un entrait 36 relie transversalement les deux bras 30, 32 pour assurer une grande rigidité au timon 28. L'entrait 36 est relié à un tronçon intermédiaire de chaque bras 30, 32, le timon 28 présentant ainsi une forme de "A" pointant vers l'avant.

Un tronçon 40 d'extrémité arrière de chaque bras 30, 32 est destiné à s'étendre sous le châssis 12 lorsque le timon 28 est fixé avec le châssis 12 dans sa position angulaire d'utilisation. Des tronçons 38 d'extrémité avant de chaque bras 30, 32 sont destinés à faire saillie longitudinalement vers l'avant du plateau 14 dans cette position angulaire d'utilisation. Comme indiqué à la figure 1, en position d'utilisation, l'entrait 36 est destiné à être agencé le long d'une traverse 17 d'extrémité avant du cadre du châssis 12, sous la ridelle 16 d'extrémité avant.

L'extrémité avant du timon 22 est équipée d'un dispositif 42 d'attelage à un véhicule automobile.

Comme cela est illustré à la figure 2, lors du transport de la remorque 10 en vue de la livraison à un revendeur, le timon 22 est avantageusement démonté et agencé contre le plateau 14, ici sous le plateau 14. Ainsi, le tronçon 38 d'extrémité avant de chaque bras est agencé de manière à ne pas faire saillie par rapport au plateau 14. Ceci permet d'obtenir un rangement compact des remorques dans le véhicule de livraison.

Afin de permettre un montage, c'est-à-dire un assemblage et une fixation, aisé du timon 28 sur le châssis 12 roulant après sa livraison, la remorque 10 comporte des moyens de fixation rapide du timon 28 au châssis 12. Ces moyens de fixation rapide permettent la fixation du timon 28 rapidement en un premier mouvement de translation dans un plan vertical longitudinal qui permet au timon 28 de passer d'un état démonté à un état assemblé par une liaison pivotante avec le châssis 12, puis un deuxième mouvement de pivotement permettant au timon 28 de passer d'une position d'assemblage jusqu'à une position d'utilisation.

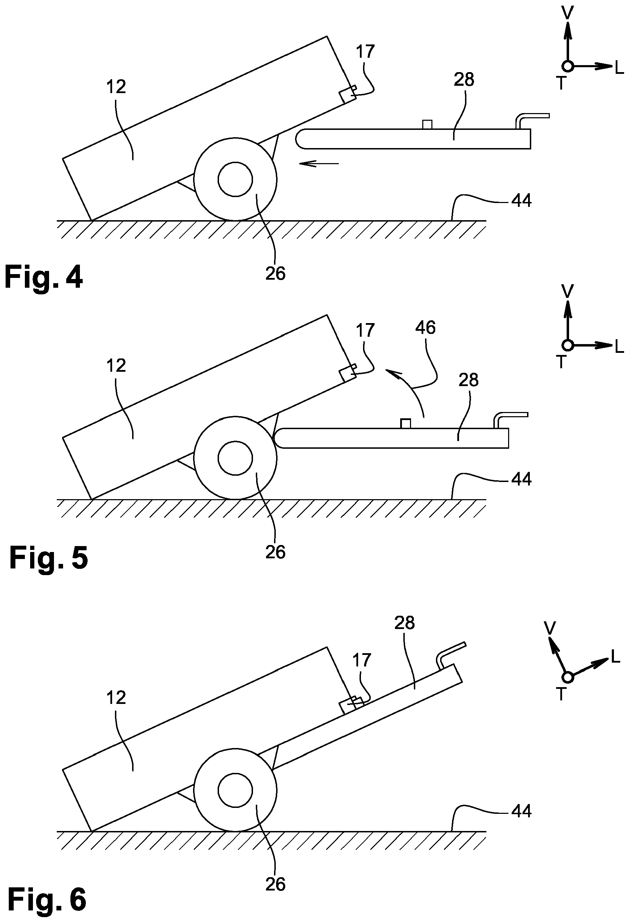

Pour permettre la fixation du timon 28, le châssis 12, reposant sur ses roues 26, est incliné par pivotement autour de l'axe des roues 26 de manière que son extrémité arrière repose au sol 44, comme cela est illustré à la figure 4. L'extrémité avant du châssis 12 est ainsi soulevée exposant la face inférieure du châssis 12.

Comme cela sera expliqué plus en détails par la suite, la remorque comporte des moyens de guidage en coulissement du timon 28 par rapport au châssis 12 dans un plan vertical longitudinal jusqu'à un état assemblé du timon dans lequel le timon 28 est en butée pivotante autour d'un axe transversal par rapport au châssis 12.

Dans les modes de réalisation représentés aux figures, chaque bras 30, 32 du timon est équipé, à son extrémité arrière, d'un premier organe fixe d'emboîtement par coulissement avec un deuxième organe complémentaire fixe du châssis entre depuis son état démonté jusqu'à son état assemblé.

Chaque organe d'emboîtement du châssis 12 est par exemple porté par un flasque vertical longitudinal situé à proximité d'une roue associée.

L'un des organes d'emboîtement est formé par un pivot d'axe transversal guidé en coulissement dans un plan longitudinal transversal dans une encoche formant l'autre organe d'emboîtement jusqu'à l'état assemblé du timon 28. Le timon 28 est ainsi assemblé avec le châssis 12 par un premier mouvement de translation jusqu'à son état assemblé dans lequel le pivot est en butée stable contre un fond de l'encoche, comme cela est illustré à la figure 5.

Pendant ce mouvement de translation, le timon 28 est ici orienté de manière que la direction verticale "V" corresponde sensiblement à la direction de la gravité.

Dans cet état assemblé, le timon 28 est susceptible de pivoter autour de l'axe transversal du pivot, dans un sens indiqué par la flèche 46, entre une position angulaire d'assemblage jusqu'à une position angulaire d'utilisation dans laquelle un tronçon intermédiaire de chaque bras 30, 32 est en butée contre la traverse 17 d'extrémité arrière du châssis 12, comme cela est illustré à la figure 6.

Selon les enseignements de l'invention, le pivotement du bras 30, 32 autour de l'axe du pivot jusqu'à sa position angulaire d'utilisation provoque l'engagement d'une face fixe de blocage du bras derrière une face fixe de butée du châssis bloquant le coulissement du timon 28 par rapport au châssis 12. Le coulissement est bloqué dans toutes les directions. Seul le pivotement du timon autour d'un axe transversal par rapport au châssis est autorisé.

Plus particulièrement, le pivot est bloqué en fond d'encoche. Lorsqu'un effort tendant à écarter le pivot du fond de l'encoche est appliqué au timon, la face de blocage bute ainsi contre la face de butée du châssis pour maintenir le pivot en fond d'encoche.

Le terme "derrière" est utilisé en rapport avec la direction de butée du pivot contre le fond de l'encoche.

On prévoit d'équiper la remorque avec des moyens d'attache d'un tronçon intermédiaire du timon 28 sur le châssis 12, qui seront décrit en détails par la suite, pour immobiliser le timon 28 en pivotement dans sa position angulaire d'utilisation. Ainsi, le timon 28 est fixé de manière solidaire avec le châssis 12.

Les moyens de fixation rapide de chaque bras 30, 32 sont identiques. Ces moyens de fixation seront décrits et représentés pour un seul bras 30, les moyens de fixation rapide de l'autre bras 32 étant structurellement et fonctionnellement identiques.

En outre, le pivot est susceptible d'autoriser le pivotement du bras autour de son axe transversal pendant son coulissement dans l'encoche. Or, si le bras 30 pivote vers sa position angulaire d'utilisation avant que le pivot ne soit en fond d'encoche, la face de blocage du bras est susceptible de ne pas être engagée derrière la face de butée du châssis. Le bras risque donc d'être démonté du châssis et de tomber.

Pour éviter ce problème, l'un des organes d'emboîtement comporte une face de détrompage qui interdit le pivotement du bras jusqu'à sa position angulaire d'utilisation tant que le bras n'est pas dons son état assemblé, c'est-à-dire tant que le pivot n'est pas en fond d'encoche. La face de détrompage coopère par exemple par contact avec un élément portant l'une des faces parmi la face de blocage ou la face de butée.

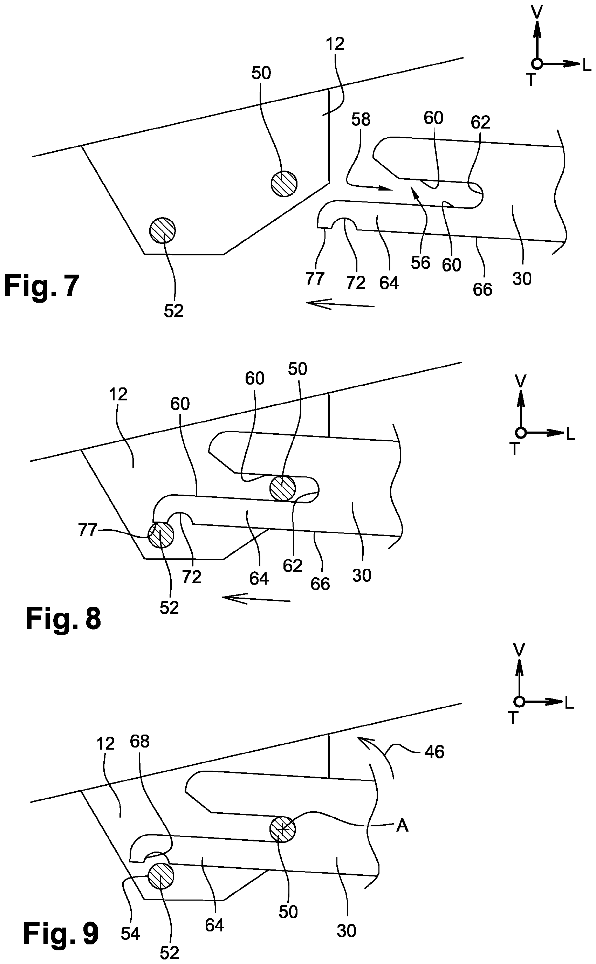

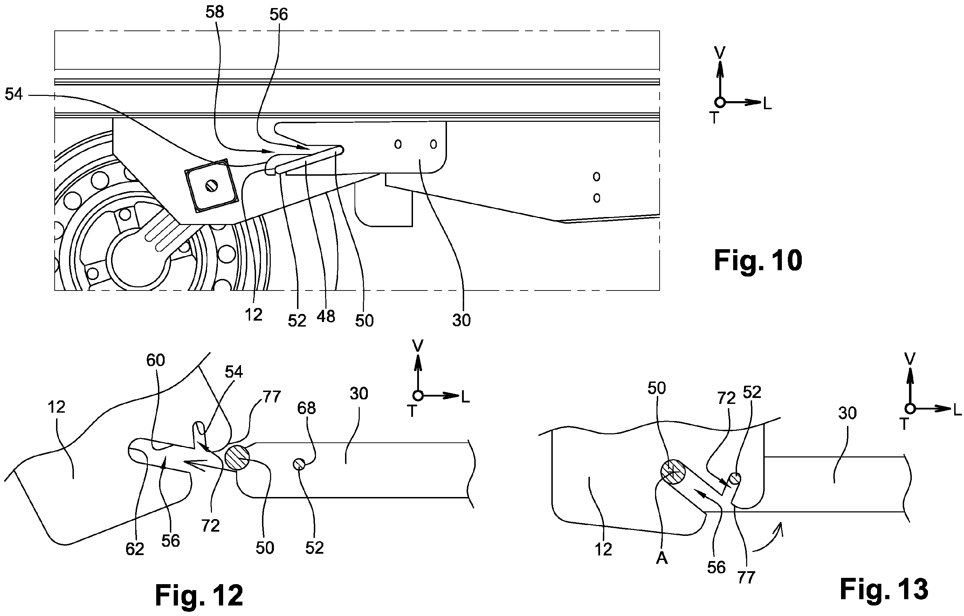

Selon un premier mode de réalisation de l'invention qui a été représenté aux figures 7 à 10, un anneau 48 en forme de "U" est fixé contre une paroi verticale du châssis 12. L'anneau 48 comporte une première branche transversale avant formant un pivot 50 d'axe "A" transversal et une deuxième branche transversale inférieure formée par une tige 52 portant une face 54 arrière de butée. Comme cela est illustré notamment à la figure 10, l'anneau 48 est légèrement incliné par rapport au plan du plateau 14 du châssis 12 de manière que le pivot 50 soit agencé légèrement au-dessus de la tige 52 arrière.

L'extrémité arrière du bras 30 du timon 28 est équipée d'un organe d'emboîtement formé par une encoche 56. L'encoche 56 présente ici la forme d'une fente longitudinale qui débouche dans un bord d'extrémité arrière du bras 30 par une ouverture 58. L'encoche 56 est délimitée par deux bords 60 supérieur et inférieur qui sont aptes à recevoir avec un jeu d'insertion le pivot 50. Elle s'étend longitudinalement vers l'avant jusqu'à un fond 62 présentant une forme apte à loger le pivot 50.

Une languette 64 longitudinale est ainsi délimitée l'encoche 56 et un bord 66 d'extrémité inférieur du bras 30.

Lors d'une première opération d'assemblage, le timon 28 est agencé horizontalement en avant du châssis 12, comme représenté à la figure 4, de manière que l'ouverture 58 de l'encoche 56 soit longitudinalement en vis-à-vis du pivot 50. Le bras 30 est alors déplacé en translation longitudinalement vers l'arrière de manière à insérer le pivot 50 dans l'encoche 56.

Pour favoriser l'insertion du pivot 50 dans l'encoche 56, l'ouverture 58 de l'encoche 56 présente avantageusement une forme d'entonnoir.

La position inclinée du châssis 12 permet de favoriser l'insertion simultanée de la languette 64 entre le pivot 50 et la tige 52, comme cela est représenté à la figure 8.

Le mouvement de translation du bras 30 est poursuivi, provoquant le coulissement du pivot 50 dans l'encoche 56. Le coulissement du pivot est guidé par les deux bords 60 de l'encoche 56. Le mouvement de translation du bras 30 se poursuit jusqu'à ce que le pivot 50 soit en butée contre le fond 62 de l'encoche 56. Le timon 28 occupe alors son état assemblé et sa position angulaire d'assemblage, comme cela est illustré à la figure 9.

Tant qu'un effort de poussée longitudinale vers l'arrière est appliquée au bras 30, le pivot 50 est bloqué en fond d'encoche 56 et le timon 29 est mobile uniquement en pivotement autour de l'axe "A" du pivot 50 par rapport au châssis 12.

Le bras 30 est ensuite pivoté dans le sens indiqué par la flèche 46 de l'axe "A" du pivot 50 depuis sa position d'assemblage jusqu'à sa position angulaire d'utilisation dans laquelle un tronçon intermédiaire du bras 30, qui est décalé longitudinalement par rapport à l'axe "A" est en butée contre le châssis 12. Pour bloquer le pivot 50 en fond d'encoche 56, le bras 30 est équipé d'une face 68 de blocage qui est destinée à être engagée derrière une face 54 de butée du châssis 12 en un mouvement d'accrochage lors du pivotement du bras 30 vers sa position angulaire d'utilisation. La face 68 de blocage est tournée dans un sens opposé par rapport au fond 62 de l'encoche 56.

A cet effet, la languette 64 comporte dans une portion d'extrémité arrière du bord 66 inférieur un cran 72 qui est destiné à venir loger la tige 52 de l'anneau 48 portant la face 54 arrière de butée lorsque le timon 28 occupe sa position angulaire d'utilisation, comme représenté à la figure 10.

Ainsi, l'opérateur chargé de la fixation du timon 28 n'a plus qu'à immobiliser le timon 28 en pivotement contre le châssis 12. Dans cette position angulaire d'utilisation, le bras 30 n'est pas susceptible d'être coulissé par rapport au châssis 12 puisque le coulissement est interdit verticalement dans les deux sens par les deux bords 60 de l'encoche 56 et il est interdit longitudinalement par butée du pivot 50 contre le fond 62 dans un sens et par butée de la face 68 de blocage contre la face 54 de butée dans l'autre sens.

L'opération finale de fixation du timon 28 sur le châssis 12 est réalisée par des moyens d'attache immobilisant le timon 28 en pivotement dans sa position angulaire d'utilisation. Etant donné qu'un tronçon intermédiaire du bras 30 de timon 28 est en butée contre le châssis 12 dans un sens, les moyens d'attache ont pour fonction d'empêcher le pivotement du timon 28 dans l'autre sens. Les moyens d'attache permettent plus particulièrement l'attache d'un tronçon intermédiaire du timon sur le châssis 12.

Comme illustré à la figure 11, il s'agit ici d'un mécanisme 74 d'attache à genouillère coopérant avec un crochet 76 de fixation pour garantir un serrage vertical de l'entrait 36 contre la ridelle 16. Le mécanisme 74 est ici fixé à une face avant de l'entrait 36 tandis que le crochet 76 est fixé à la ridelle 16.

En variante non représentée de l'invention, le mécanisme à genouillère est fixé à la ridelle tandis que le crochet de fixation est fixé à l'entrait.

Comme représenté à la figure 8, le bord inférieur du bras agencé en arrière du cran 72 forme une face 77 de détrompage qui coopère par contact avec la tige 52 pour empêcher le pivotement du bras 30 jusqu'à sa position angulaire d'utilisation tant que le pivot 50 n'est pas contre le fond 62 de l'encoche 56. A cet effet, la face 77 de détrompage glisse sur la tige 52 pendant le coulissement du pivot 50.

Selon un deuxième mode de réalisation de l'invention qui est représenté aux figures 12 et 13, et par inversion mécanique, l'organe d'emboîtement comportant l'encoche 56 est porté par un flasque vertical longitudinal du châssis 12 et l'organe d'emboîtement formé par le pivot 50 est porté par le bras 30.

Dans l'exemple représenté à la figure 12, l'encoche 56 est aussi formée par une fente qui est orientée longitudinalement lors du premier mouvement d'emboîtement longitudinal du bras 30 vers le châssis 12. Un bord 60 supérieur de l'encoche 56 est muni d'un cran 72 dont une face avant forme la face 54 de butée du châssis 12. La face 54 de butée est tournée dans un sens opposé par rapport au fond 62 de l'encoche 56.

Le bras 30 comporte le pivot 50 d'axe transversal qui est destiné à être reçu coulissant jusqu'au fond 62 de l'encoche 56. Le coulissement du pivot 50 est guidé par les bords 66 de l'encoche 56.

Le bras 30 comporte aussi une tige 52 destinée à être reçue dans le cran 72 lors du pivotement du bras 30 depuis sa position d'assemblage jusqu'à sa position d'utilisation. Une face avant de la tige 52 forme ainsi la face 68 de blocage du pivot 50 en fond d'encoche 56. La tige 52 est ici agencée longitudinalement en avant du pivot 50 de manière à réserver un espace longitudinal entre le pivot 50 et la tige 52.

Le pivotement du bras 30 est ensuite immobilisé par un mécanisme d'attache similaire à celui du premier mode de réalisation.

Une face 77 de détrompage est ici formée par un bord inférieur du flasque du châssis 12 agencé en avant du cran 72. La face 77 de détrompage coopère par glissement avec la tige 52 du bras pour empêcher le pivotement du bras 30 jusqu'à sa position angulaire d'utilisation tant que le pivot 50 n'est pas en fond d'encoche 56.

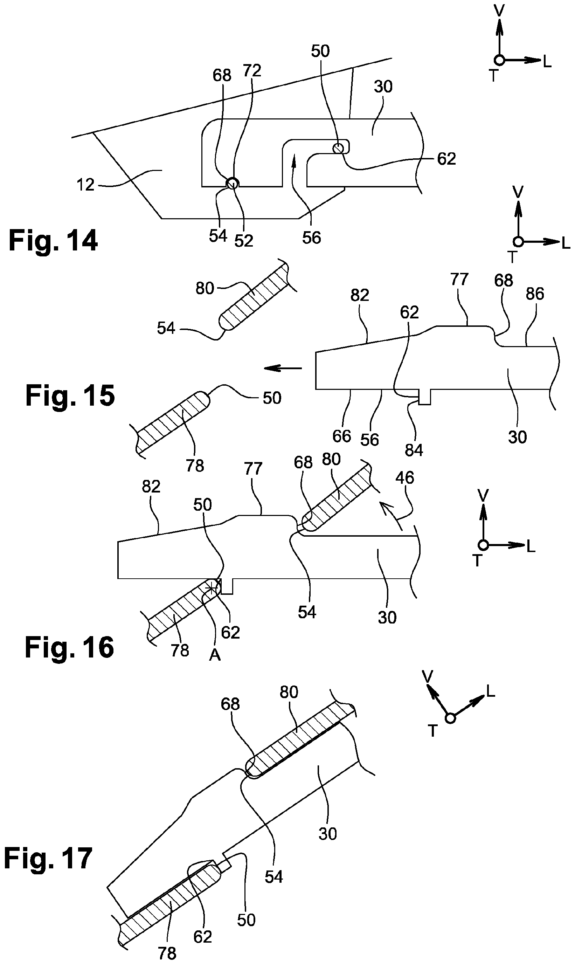

On a représenté à la figure 14 un troisième mode de réalisation de l'invention qui est similaire au premier mode de réalisation de l'invention. Seules les différences seront donc décrites par la suite.

Seule la forme de l'encoche 56 change. Il s'agit ici d'une encoche 56 en forme de "L" inversé débouchant dans un bord 66 inférieur du bras 30.

L'opération d'emboîtement par coulissement comporte ainsi un premier coulissement vertical du pivot 50 dans la première partie verticale de l'encoche, puis un deuxième coulissement longitudinal du pivot 50 jusqu'au fond 62 de l'encoche 56. Le bras 30 est alors dans son état assemblé avec le châssis 12. Le bras 30 occupe plus particulièrement sa position angulaire d'assemblage. Le coulissement du pivot 50 est guidé par les deux bords 66 opposés de l'encoche 56.

Puis le pivotement du bras 30 vers sa position angulaire d'utilisation provoque l'engagement de la tige 52 dans le cran 72. La face 68 de blocage du bras 30 est alors engagée derrière à la face 54 de butée du châssis, bloquant ainsi le pivot 50 en fond d'encoche 56. Le cran 72 et la tige 52 présentent la même structure que dans le premier mode de réalisation car on cherche à empêcher un même mouvement de coulissement longitudinal.

Le pivotement du bras 30 est ensuite immobilisé par un mécanisme d'attache similaire à celui du premier mode de réalisation.

Selon un quatrième mode de réalisation de l'invention qui est représenté aux figures 15 à 17, l'organe d'emboîtement formé par le pivot 50 est porté par le châssis 12, tandis que l'organe d'emboîtement formé par l'encoche 56 est porté par le bras 30.

Le pivot 50 est ici formé par un bord d'extrémité avant d'une plaque 78 transversale qui est parallèle au plateau 14 du châssis 12. Dans la position inclinée du châssis 12, la plaque 78 est donc inclinée de manière que ledit bord soit orienté vers le haut, comme représenté à la figure 15. Cette plaque. La plaque 78 est fixée au châssis 12 de la remorque 10.

Une deuxième plaque 80 parallèle à la première est décalée vers le haut par rapport à la première plaque 78. Cette deuxième plaque 80 est aussi fixée au châssis. Un bord d'extrémité arrière libre forme la face 54 de butée du châssis 12 qui est décalé vers l'avant par rapport au pivot 50.

Ainsi, un passage longitudinal est réservé entre le pivot 50 et la face 54 de butée.

Le bras 30 comporte un bord 66 inférieur et un bord 82 supérieur. Le bord 66 inférieur est muni d'une face 84 d'épaulement tournée vers l'arrière qui fait saillie verticalement vers le bas. Le bord 66 inférieur et la face 84 d'épaulement délimitent une encoche 56 ouverte dans la partie inférieure de l'extrémité arrière du bras 30.

Le coin formé entre le bord 66 et la face 84 d'épaulement forme le fond 62 de l'encoche 56 qui est destiné à loger le pivot 50.

L'extrémité arrière du bras 30 est ainsi insérée longitudinalement dans le passage entre le pivot 50 et la face 54 de butée. Le coulissement du pivot 50 est alors guidé longitudinalement par contact entre le bord 66 inférieur du bras 30 et le pivot 50, d'une part, et par contact entre le bord 82 supérieur du bras 30 et la face 54 de butée, d'autre part. En outre, le timon 28 est ici orienté de manière que le bord 66 inférieur du bras 30 repose par gravité sur le pivot 50.

En variante non représentée de l'invention, le coulissement du pivot est guidé uniquement par le bord inférieur du bras.

Le bord 82 supérieur comporte en outre, dans un tronçon avant, un décrochement formant un palier 86 séparé du bord supérieur par la face 68 de blocage tournée vers l'avant. Ainsi, lorsque le bras 30 est dans son état assemblé, le pivot 50 est en fond d'encoche 56. Le bras 30 est alors pivoté autour de l'axe "A" du pivot 50 jusqu'à sa position angulaire d'utilisation. Ce faisant, la plaque 80 supérieure est reçue dans le décrochement du bras 30, engageant la face 68 de blocage derrière la face 54 de butée du châssis 12.

Ainsi, comme dans les trois premiers modes de réalisation de l'invention, lorsqu'il occupe sa position angulaire d'utilisation, le bras 30 est bloqué en coulissement dans la direction verticale dans les deux sens par chaque plaque 78, 80 et dans la direction longitudinale par le fond 62 de l'encoche 56 dans un sens et par la face 54 de butée dans l'autre sens.

Le pivotement du bras 30 est ensuite immobilisé dans sa position angulaire d'utilisation par un mécanisme d'attache similaire à celui du premier mode de réalisation.

La face 82 supérieure du bras forme avantageusement la face 77 de détrompage qui empêche le pivotement du bras 30 autour de l'axe "A" du pivot 50 tant que le pivot 50 n'est pas en fond d'encoche 56. Ainsi, cette face 77 de détrompage participe au guidage en coulissement du pivot 50 dans l'encoche 56.

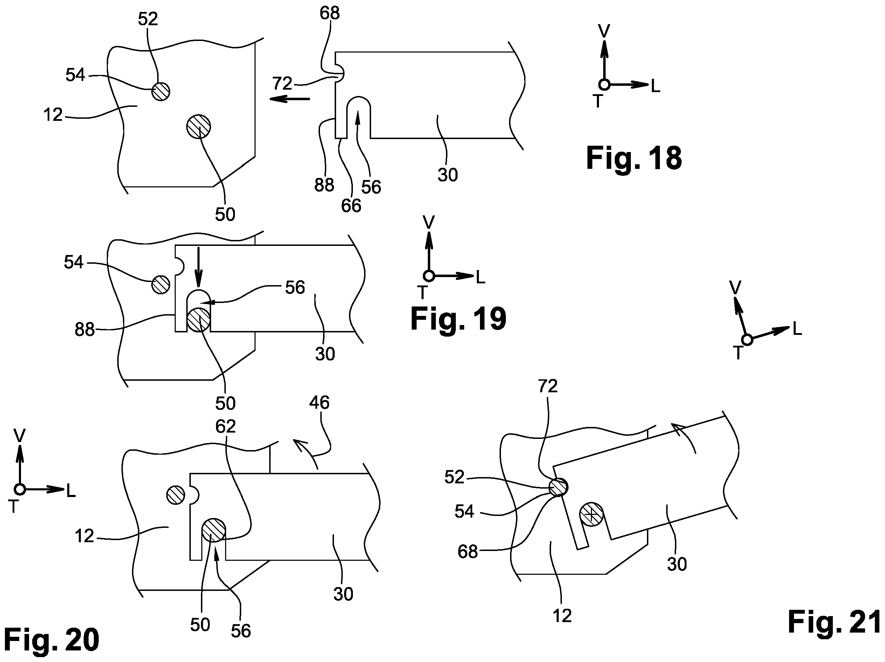

On a représenté aux figures 18 à 21 un cinquième mode de réalisation de l'invention qui est similaire au premier mode de réalisation de l'invention. Seules les différences seront donc décrites.

Dans ce mode de réalisation, l'encoche 56 est ici formée par une fente verticale débouchant dans un bord 66 inférieur du bras 30. De ce fait, l'encoche 72 portant la face 68 de blocage est ici agencée dans un bord 88 vertical d'extrémité arrière du bras 30. La face 68 de blocage est orientée verticalement vers le haut.

L'anneau 48 en "U" est ici agencé de manière inversée par rapport au premier mode de réalisation. Ainsi, la tige 52 est décalée en arrière et vers le haut par rapport au pivot 50.

Lors de la fixation du timon 28 sur le châssis 12, l'encoche 56 du bras 30 est tout d'abord amenée au droit du pivot 50, comme représenté à la figure 19. Pour faciliter cette mise en position, la face 88 d'extrémité arrière du bras 30 est alors en butée contre la tige 52.

Puis le bras 30 est translaté vers le bas, avantageusement sous l'effet de la gravité, jusqu'à ce que le pivot 50 soit en fond d'encoche 56, comme représenté à la figure 20. Le pivot 50 est guidé en coulissement par les bords 66 opposés de l'encoche 56. Le bras 30 est ensuite pivoté autour de l'axe "A" du pivot vers sa position angulaire d'utilisation, comme indiqué par la flèche 46.

La tige 52 est alors logée dans le cran 72 de manière que la face 68 de blocage soit engagée derrière la face 54 de butée du châssis 12 pour bloquer le pivot 50 en fond d'encoche 56.

La face 82 d'extrémité avant du bras forme aussi face 77 de détrompage empêchant le pivotement du bras 30 jusqu'à sa position angulaire d'utilisation tant que le pivot 50 n'est pas en fond d'encoche 56.

Selon une variante de l'invention adaptables à tous les modes de réalisation de l'invention, l'encoche 56 est munie de moyens 90 de verrouillage commandés pour emprisonner le pivot 50 en fond d'encoche 56 lorsque le timon 28 occupe son état assemblé. Ces moyens 90 de verrouillage permettent de garantir que le timon 28 restera de manière stable dans son état assemblé avec le châssis 12 pendant le pivotement du timon 28 indépendamment de l'effort longitudinal appliqué par l'opérateur sur le timon 28.

Les moyens 90 de verrouillage sont commandés automatiquement vers une position de fermeture lorsque le pivot 50 est coulissé en butée en fond d'encoche 56.

Les faces 77 de détrompage garantissent avantageusement que le timon 28 ne sera pas pivoté jusqu'à sa position angulaire d'utilisation tant que le pivot 50 n'est pas bloqué en fond d'encoche par les moyens 90 de verrouillage.

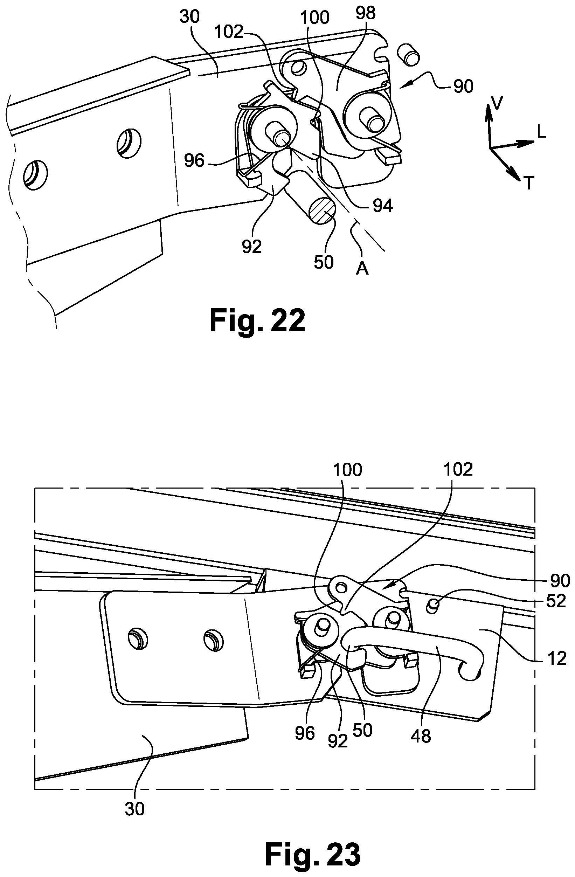

On a représenté aux figures 22 et 23 cette variante adaptée au cinquième mode de réalisation de l'invention. L'encoche 56 du bras 30 est équipée de moyens 90 de verrouillage qui sont commandés entre un état de libération dans lequel le pivot 50 du châssis 12 est libre de coulisser dans les deux sens dans l'encoche 56 du bras 30, comme illustré à la figure 22, et un état de verrouillage dans lequel le pivot 50 est bloqué en fond d'encoche 56, comme illustré à la figure 23. Ces moyens 90 de verrouillage permettent de garantir le maintien du bras 30 dans son état assemblé avec le châssis 12 pendant son pivotement.

Dans le mode de réalisation représenté aux figure et plus particulièrement à la figure 22, les moyens 90 de verrouillage comportent un loquet 92 qui est monté mobile sur le bras 30 entre une position de libération de l'ouverture de l'encoche 56, comme représenté à la figure 22, et une position de fermeture de l'ouverture de l'encoche 56 dans laquelle le loquet 60 est agencé en travers de l'ouverture 58 pour permettre d'emprisonner le pivot 50 après son insertion jusqu'au fond 62 de l'encoche 56.

Dans le mode de réalisation représenté aux figures 22, 23, le loquet 92 est monté pivotant autour d'un axe "A" transversal sur une face interne de la plaque 54.

Les moyens 90 de verrouillage sont avantageusement déclenchés automatiquement pour permettre un maintien en état assemblé du timon 28 avec le châssis 12. Le passage automatique des moyens 90 de verrouillage dans leur état verrouillé est notamment commandé au moyen d'une came 94 de contact du loquet 92. Cette came 94 est poussée par le pivot 50 lors de son insertion en fond d'encoche 56 de manière à provoquer le pivotement automatique du loquet 92 jusqu'à sa position de fermeture.

La came 94 et le loquet 92 forment ici chacun un doigt d'une pièce unique de manière qu'un espace en forme de "U" soit ménagé entre les doigts pour recevoir le pivot 50.

Le loquet 92 est rappelé élastiquement ici par un ressort de torsion 96 vers sa position de libération afin de faciliter l'assemblage du timon 28 sur le châssis 12.

Enfin, pour verrouiller le loquet 92 dans sa position de fermeture, les moyens 90 de verrouillage comportent un cliquet 98 de verrouillage automatique qui est monté mobile sur le bras 30 entre une position d'encliquetage pour verrouiller le loquet 92 en position de fermeture par emboîtement élastique de formes complémentaires. A cet effet, le loquet 92 comporte ici un cran 100 recevant un ergot 102 du cliquet 98 pour bloquer le loquet 92 en position de fermeture. Le verrouillage du loquet 92 dans sa position de fermeture est ainsi réalisé automatiquement lors de l'insertion du pivot 50 jusqu'au fond 62 de l'encoche 56.

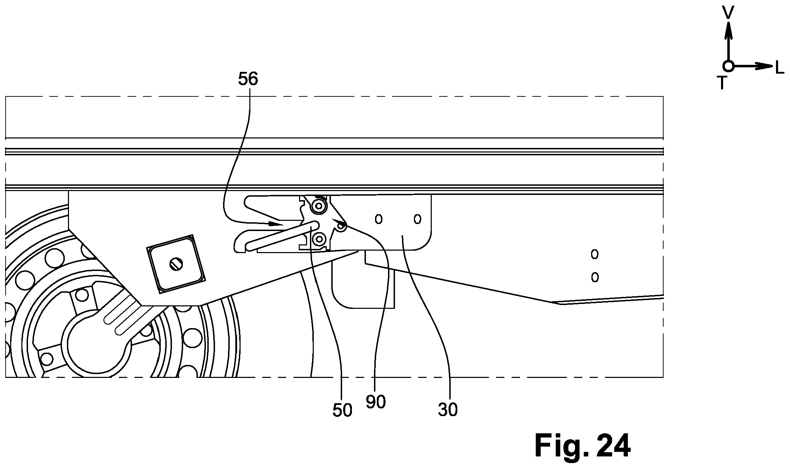

On a représenté à la figure 24 des moyens 90 de verrouillage identiques à ceux décrits précédemment adaptés au premier mode de réalisation de l'invention.

L'invention réalisée selon l'un quelconque des modes de réalisation permet ainsi de réaliser la fixation du timon 28 sur le châssis 12 de manière simple et rapide en trois opérations : une première opération d'assemblage dans laquelle le timon subit un mouvement de translation, une opération de pivotement, et une opération d'attachement du timon sur le châssis 12.

On comprendra bien entendu que l'invention n'est pas limitée aux modes de réalisation représentés aux figures. L'invention s'applique aussi à des remorques comportant des encoches 56 de formes différentes de celles déjà décrites.

## Revendications

1. Remorque (10) pour véhicule automobile, la remorque (10) comportant :
- un châssis (12) roulant ;
- un timon (28) longitudinal qui comporte au moins un bras (30, 32) d'extrémité arrière destiné à être assemblé avec le châssis (12) dans un état assemblé dans lequel le timon (28) est pivotant autour d'un axe (A) transversal entre une position angulaire d'assemblage et une position angulaire d'utilisation ;
**caractérisée en ce qu'**elle comporte des moyens de guidage en coulissement du timon par rapport au châssis dans un plan vertical longitudinal jusqu'à un état assemblé du timon dans lequel le timon est en butée pivotante autour d'un axe transversal par rapport au châssis, le pivotement du timon (28) jusqu'à sa position angulaire d'utilisation provoquant l'engagement d'une face (68) de blocage du bras (30, 32) derrière une face (54) de butée du châssis (12) bloquant le coulissement du timon (28) par rapport au châssis (12).

2. Remorque selon la revendication précédente, **caractérisée en ce que** le bras (30, 32) est équipé d'un premier organe d'emboîtement par coulissement avec un deuxième organe complémentaire du châssis, l'un des organes d'emboîtement étant formé par un pivot (50) d'axe (A) transversal guidé en coulissement dans un plan longitudinal transversal dans une encoche (56) formant l'autre organe d'emboîtement jusqu'à son état assemblé dans laquelle le pivot (50) est en butée contre un fond (62) de l'encoche (56), le pivotement du bras (30, 32) ainsi assemblé jusqu'à sa position angulaire d'utilisation provoquant l'engagement d'une face (68) de blocage du bras (30, 32) derrière une face (54) de butée du châssis (12) bloquant le pivot (50) en fond d'encoche (56).

3. Remorque (10) selon la revendication précédente, **caractérisée en ce que** la remorque (10) comporte des moyens (74, 76) d'attache du timon (28) avec le châssis (12) immobilisant le timon (28) en pivotement dans sa position angulaire d'utilisation.

4. Remorque (10) selon l'une quelconque des revendications précédentes, **caractérisée en ce que** l'un des organes d'emboîtement comporte une face (77) de détrompage qui interdit le pivotement du bras (30, 32) jusqu'à sa position angulaire d'utilisation tant que le bras (30, 32) n'occupe pas son état assemblé.

5. Remorque (10) selon la revendication précédente, **caractérisée en ce que** la face (77) de détrompage coopère par contact un élément portant l'une des faces parmi la face (68) de blocage ou la face (54) de butée.

6. Remorque (10) selon l'une quelconque des revendications 3 ou 4, **caractérisée en ce que** la face (77) de détrompage participe au guidage en coulissement du pivot (50) dans l'encoche (56).

7. Remorque (10) selon l'une quelconque des revendications précédentes, **caractérisée en ce que** le pivot (50) est porté par le châssis (12) tandis que l'encoche (56) est portée par le bras (30, 32).

8. Remorque (10) selon l'une quelconque des revendications 3 à 6, **caractérisée en ce que** les moyens (74, 76) d'attache du timon sur le châssis sont formés par de moyens de fixation d'un tronçon (36) intermédiaire du timon (28) sur le châssis (12).

9. Remorque (10) selon l'une quelconque des revendications précédentes, **caractérisée en ce que** le pivotement du timon (28) est limité dans sa position angulaire d'utilisation par butée d'un tronçon (36) intermédiaire contre le châssis (12).

10. Remorque (10) selon l'une quelconque des revendications précédentes, **caractérisée en ce que** l'encoche (56) est orientée longitudinalement.

11. Remorque (10) selon l'une quelconque des revendications 2 à 9, **caractérisée en ce que** l'encoche (56) est orientée verticalement.

12. Remorque (10) selon l'une quelconque des revendications précédentes, **caractérisée en ce que** l'encoche (56) est munie de moyens (90) de verrouillage commandés pour emprisonner le pivot (50) en fond d'encoche (56) lorsque le timon (28) occupe son état assemblé.

## Patentansprüche

1. Anhänger (10) für ein Kraftfahrzeug, wobei der Anhänger (10) Folgendes beinhaltet:
- ein rollendes Fahrgestell (12);
- eine Längsdeichsel (28), die mindestens einen hinteren Abschlussarm (30, 32) beinhaltet, der dazu bestimmt ist, mit dem Fahrgestell (12) in einem montierten Zustand montiert zu sein, wobei die Deichsel (28) um eine Querachse (A) zwischen einer Montagewinkelposition und einer Verwendungswinkelposition schwenkt;
**dadurch gekennzeichnet, dass** er Mittel zur gleitenden Führung der Deichsel mit Bezug auf das Fahrgestell auf einer vertikalen Längsebene bis zu einem montierten Zustand der Deichsel beinhaltet, wobei sich die Deichsel in schwenkendem Anschlag um eine Querachse mit Bezug auf das Fahrgestell befindet, wobei der Schwenk der Deichsel (28) bis in ihre Verwendungswinkelposition das Eingreifen einer Seite (68) zur Blockierung des Arms (30, 32) hinter einer Seite (54) zum Anschlag des Fahrgestells (12) hervorruft, die das Gleiten der Deichsel (28) mit Bezug auf das Fahrgestell (12) blockiert.

2. Anhänger nach dem vorstehenden Anspruch, **dadurch gekennzeichnet, dass** der Arm (30, 32) mit einem ersten Organ zum gleitenden Zusammenfügen mit einem zweiten komplementären Organ des Fahrgestells ausgestattet ist, wobei eines der Organe zum Zusammenfügen durch einen Schwenkzapfen (50) einer Querachse (A), der gleitend auf einer längs gerichteten Querebene in einer Nut (56) gebildet ist, die das andere Organ zum Zusammenfügen bildet, bis zu seinem montierte Zustand geführt wird, indem der Schwenkzapfen (50) auf Anschlag an einem Grund (62) der Nut (56) liegt, wobei der Schwenk des so montierten Arms (30, 32) bis in seine Verwendungswinkelposition das Eingreifen einer Seite (68) zur Blockierung des Arms (30, 32) hinter einer Seite (54) zum Anschlag des Fahrgestells (12) hervorruft, wodurch der Schwenkzapfen (50) am Grund der Nut (56) blockiert wird.

3. Anhänger (10) nach dem vorstehenden Anspruch, **dadurch gekennzeichnet, dass** der Anhänger (10) Mittel (74, 76) zur Befestigung der Deichsel (28) mit dem Fahrgestell (12) beinhaltet, wodurch die Deichsel (28) in ihrer Verwendungswinkelposition gegen den Schwenk gesichert wird.

4. Anhänger (10) nach einem der vorstehenden Ansprüche, **dadurch gekennzeichnet, dass** eines der Organe zum Zusammenfügen eine Seite (77) zum Verwechslungsschutz beinhaltet, die den Schwenk des Arms (30, 32) bis in seine Verwendungswinkelposition verhindert, solange der Arm (30, 32) nicht seinen montierten Zustand einnimmt.

5. Anhänger (10) nach dem vorstehenden Anspruch, **dadurch gekennzeichnet, dass** die Seite (77) zum Verwechslungsschutz durch Kontakt mit einem Element zusammenwirkt, das eine der Seiten aus der Seite (68) zur Blockierung oder der Seite (54) zum Anschlag trägt.

6. Anhänger (10) nach einem der Ansprüche 3 oder 4, **dadurch gekennzeichnet, dass** die Seite (77) zum Verwechslungsschutz zur gleitenden Führung des Schwenkzapfens (50) in der Nut (56) beiträgt.

7. Anhänger (10) nach einem der vorstehenden Ansprüche, **dadurch gekennzeichnet, dass** der Schwenkzapfen (50) vom Fahrgestell (12) getragen wird, während die Nut (56) vom Arm (30, 32) getragen wird.

8. Anhänger (10) nach einem der Ansprüche 3 bis 6, **dadurch gekennzeichnet, dass** die Mittel (74, 76) zur Befestigung der Deichsel auf dem Fahrgestell durch Mittel zur Fixierung eines Zwischenabschnitts (36) der Deichsel (28) auf dem Fahrgestell (12) gebildet werden.

9. Anhänger (10) nach einem der vorstehenden Ansprüche, **dadurch gekennzeichnet, dass** der Schwenk der Deichsel (28) in ihrer Verwendungswinkelposition durch Anschlag eines Zwischenabschnitts (36) gegen das Fahrgestell (12) begrenzt ist.

10. Anhänger (10) nach einem der vorstehenden Ansprüche, **dadurch gekennzeichnet, dass** die Nut (56) längs ausgerichtet ist.

11. Anhänger (10) nach einem der Ansprüche 2 bis 9, **dadurch gekennzeichnet, dass** die Nut (56) vertikal ausgerichtet ist.

12. Anhänger (10) nach einem der vorstehenden Ansprüche, **dadurch gekennzeichnet, dass** die Nut (56) mit Mitteln (90) zur Verriegelung versehen ist, die gesteuert sind, um den Schwenkzapfen (50) am Grund der Nut (56) einzuschließen, wenn die Deichsel (28) ihren montierten Zustand einnimmt.

## Claims

1. Trailer (10) for motor vehicle, the trailer (10) comprising:
- a rolling chassis (12);
- a longitudinal drawbar (28) that comprises at least one rear end arm (30, 32) intended to be assembled with the chassis (12) in an assembled state wherein the drawbar (28) is pivoting about a transversal axis (A) between an angular position of assembly and an angular position of use;
**characterised in that** it comprises sliding guide means of the drawbar with respect to the chassis in a longitudinal vertical plane to the assembled state of the drawbar wherein the drawbar is in pivoting abutment about a transversal axis with respect to the chassis, with the pivoting of the drawbar (28) to its angular position of use causing the engagement of a face (68) for blocking the arm (30, 32) behind an abutment face (54) of the chassis (12) blocking the sliding of the drawbar (28) with respect to the chassis (12).

2. Trailer according to the preceding claim, **characterised in that** the arm (30, 32) is equipped with a first member for slidably nesting with a second complementary member of the chassis, one of the members for nesting being formed by a pivot (50) with a transversal axis (A) slidably guided in a transversal longitudinal plane in a notch (56) forming the other member for nesting up to its assembled state, wherein the pivot (50) is in abutment against a bottom (62) of the notch (56), the pivoting of the arm (30, 32) thus assembled to its angular position of use causing the engagement of a face (68) for blocking the arm (30, 32) behind an abutment face (54) of the chassis (12) blocking the pivot (50) at the bottom of the notch (56).

3. Trailer (10) according to the preceding claim, **characterised in that** the trailer (10) comprises means (74, 76) for attaching the drawbar (28) with the chassis (12) immobilising pivotally the drawbar (28) in its angular position of use.

4. Trailer (10) according to any one of the preceding claims, **characterised in that** one of the members for nesting comprises a foolproof face (77) that prohibits the pivoting of the arm (30, 32) to the angular position of use as long as the arm (30, 32) does not occupy its assembled state.

5. Trailer (10) according to the preceding claim, **characterised in that** the foolproof face (77) cooperates via contact with an element carrying one of the faces among the blocking face (68) or the abutment face (54).

6. Trailer (10) according to any of claims 3 or 4, **characterised in that** the foolproof face (77) participates in the guiding by sliding of the pivot (50) in the notch (56).

7. Trailer (10) according to any one of the preceding claims, **characterised in that** the pivot (50) is carried by the chassis (12) while the notch (56) is carried by the arm (30, 32).

8. Trailer (10) according to any one of claims 3 to 6, **characterised in that** the means (74, 76) for attaching the drawbar on the chassis are formed by means for fixing an intermediate section (36) of the drawbar (28) on the chassis (12).

9. Trailer (10) according to any one of the preceding claims, **characterised in that** the pivoting of the drawbar (28) is limited in its angular position of use by abutment of an intermediate section (36) against the chassis (12).

10. Trailer (10) according to any one of the preceding claims, **characterised in that** the notch (56) is oriented longitudinally.

11. Trailer (10) according to any one of claims 2 to 9, **characterised in that** the notch (56) is oriented vertically.

12. Trailer (10) according to any one of the preceding claims, **characterised in that** the notch (56) is provided with means (90) for locking controlled to confine the pivot (50) at the bottom of the notch (56) when the drawbar (28) occupies its assembled state.
